# EUROPÄISCHE PATENTSCHRIFT

(11) **EP 1 792 381 B1**
(45) Veröffentlichungstag und Bekanntmachung des Hinweises auf die Patenterteilung: **07.09.2011**
(21) Anmeldenummer: 05790091.2
(22) Anmeldetag: 16.09.2005
(51) Int. Cl.: H02K 1/18, H02K 1/27, H02K 15/00, H02K 15/02

(54) **GENERATOR/ELEKTROMOTOR, INSBESONDERE FÜR DIE VERWENDUNG AN WINDKRAFTANLAGEN, SEILZUGANLAGEN ODER HYDRAULISCHEN ANLAGEN**
GENERATOR/ELECTRIC MOTOR, IN PARTICULAR FOR WIND POWER PLANTS, CABLE CONTROLLED PLANTS OR FOR HYDRAULIC PLANTS
GENERATEUR/MOTEUR ELECTRIQUE A UTILISER NOTAMMENT DANS DES CENTRALES EOLIENNES, INSTALLATIONS A COMMANDE PAR CABLE OU CENTRALES HYDRAULIQUES

(30) Priorität: 20.09.2004 IT BZ20040047
(43) Veröffentlichungstag der Anmeldung: 06.06.2007
(60) Teilanmeldung: 11173378.8
(73) Patentinhaber: WILIC S.AR.L, 1724 Luxembourg (LU)
(72) Erfinder: PABST, Otto, I-39037 Rio Pusteria (BZ) (IT); KLEINLERCHER, Michael, A-6150 Steinach (AT)
(74) Vertreter: Jorio, Paolo
(86) Internationale Anmeldenummer: PCT/IB2005/002742
(87) Internationale Veröffentlichungsnummer: WO 2006/032969

(56) Entgegenhaltungen:
- EP-A- 0 313 392
- WO-A1-03/003541
- WO-A1-03/003541
- DE-B- 1 130 913
- GB-A- 191 317 268
- US-A- 3 221 195
- PATENT ABSTRACTS OF JAPAN Bd. 006, Nr. 132 (E-119), 17. Juli 1982 (1982-07-17) & JP 57 059462 A (MEIDENSHA ELECTRIC MFG CO LTD), 9. April 1982 (1982-04-09)

## Beschreibung

Die vorliegende Erfindung bezieht sich auf einen Generator/Elektromotor, insbesondere für die Verwendung an Windkraftanlagen, Seilzuganlagen oder hydraulischen Anlagen, umfassend ein Lager, einen am Lager feststehenden, ringförmigen Stator, einen ringförmigen, gegenüber dem Stator drehbaren Rotor, und mit dem Rotor verbundene Antriebsmittel, Permanentmagneten und Wicklungen, die jeweils an gegenüberliegenden Flächen des Stators und des Rotors angeordnet sind, gemäß dem Oberbegriff des Anspruchs 1.

Bei derartigen Generatoren besteht das schwerwiegende Problem, dass sowohl die Permanentmagneten als auch die Wicklungen schwierig zu warten und reparieren sind, wo in den meisten Fällen der Generator/Motor vollständig abgenommen werden muss, sowohl um zur Fehlerstelle oder zum zu wartenden Teil Zugang zu finden als auch um geradezu den kompletten Stator oder Rotor abzunehmen, um ihn in die Werkstatt zu bringen und zu reparieren oder zu warten.

So ist in der internationalen Patentanmeldung WO 2004/017497 A1 ein Generator beschrieben, wo eine einfache Montage und Demontage von einzelnen Generatorbestandteilen möglich ist. In diesem Fall ist jedoch nur eine besondere Anordnung von ringförmigen Wicklungen und dieselben Anker vorgesehen, die nacheinander angeordnet sind, es wird jedoch kein Hinweis dazu gegeben, wie das Problem des Generators mit den Merkmalen des Oberbegriffes gelöst werden könnte.

WO 03/003541 offenbart einen Elektromotor mit den Merkmalen des Oberbegriffs des Anspruchs 1.

Aufgabe der vorliegenden Erfindung ist daher die, einen Generator/Elektromotor der oben angegebenen Art bereitzustellen, um einfach montiert und repariert und gewartet werden zu können, indem ein Generator/Motor ausgeführt wird, der am Ort leicht zugänglich ist, wo die Notwendigkeit einer Reparatur oder Wartung besteht.

Diese Aufgabe wird durch einen Generator/Elektromotor, insbesondere für Windkraftanlagen, Seilzuganlagen oder hydraulischen Anlagen mit den Merkmalen des kennzeichnenden Teils des Anspruchs 1 gelöst.

Wird der Rotor und/oder Stator durch in axialer Richtung verlaufende Schnitte unterteilt, so werden in axialer Richtung einzelne Sektoren erhalten, die aneinander anliegend angeordnet und zugänglich sind oder ein einzelner Sektor kann in axialer Richtung eingebracht und ausgezogen werden oder ein Sektor kann mit einer Öffnung über den Zugang zu den Wicklungen und/oder den Permanentmagneten versehen sein.

Jeder Sektor umfasst mindestens einen Permanentmagneten und/oder eine Wicklung, der/die auf einer Basis angeordnet ist, die mit einem schwalbenschwanzförmigen Profil versehen ist, das in einem Fenster des Statoren- und/oder Rotorenringes eingreift. So wird jeder Sektor in axialer Richtung ausziehbar ohne dass der gesamte Stator und/oder Rotor abgenommen werden muss.

Weitere Vorteile des Generators/ Elektromotors gemäß der Erfindung gehen aus der folgenden Beschreibung einer bevorzugten, in der beigefügten Zeichnung dargestellten Ausführungsform hervor. Es zeigen:

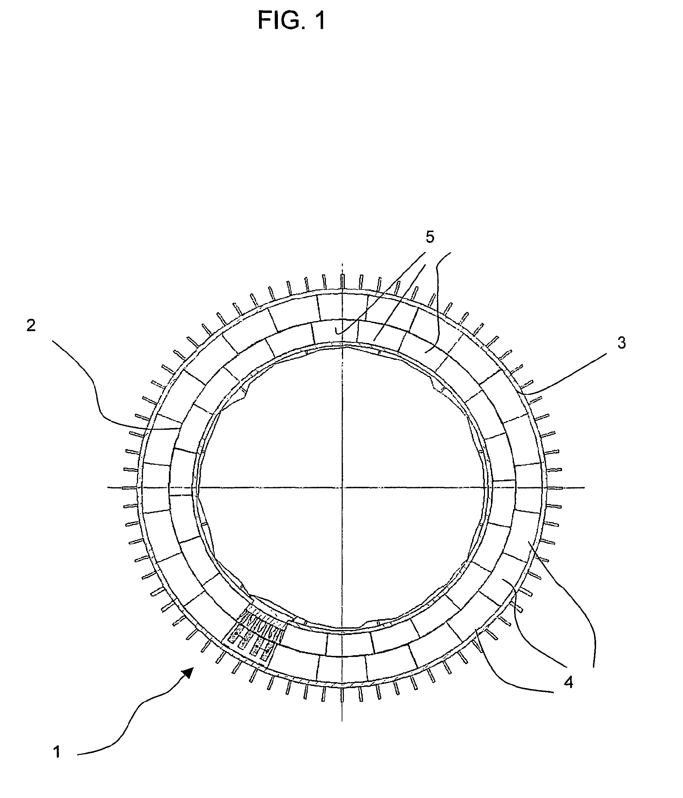

- Figur 1: eine Ansicht in Axialrichtung eines erfin- dungsgemäßen Generators/Elektromotors, insbe- sondere für Windkraftanlagen, Seilzuganlagen und/oder hydraulischen Anlagen und

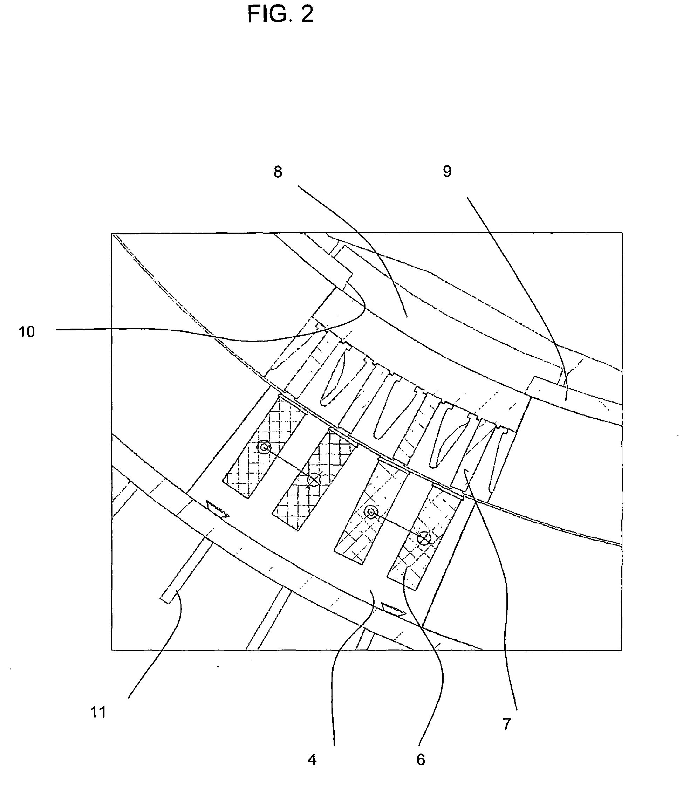

- Figur 2: eine schematische, vergrößerte Einzelheit aus Figur 1.

Wie in den Figuren gezeigt ist mit der Bezugsziffer 1 insgesamt ein erfindungsgemäßer Generator/Elektromotor dargestellt.

Dieser umfasst einen Stator 3 und einen Rotor 2.

Der Stator 3 ist in eine Vielzahl von Sektoren 4 unterteilt, während der Rotor 2 in eine Vielzahl von Sektoren 4 unterteilt ist.

Jeder Sektor 4 umfasst mindestens eine Wicklung 6, im vorliegenden Fall zwei, die als Zahnspule ausgeführt sind.

Die Permanentmagneten 7 sind in den Sektoren 5 aufgenommen.

Gemäß der Erfindung mindestens ein Permanentmagnet 7, im vorliegenden Fall vier Permanentmagnete, sind an einer schwalbenschwanzförmigen Basis 8 angeordnet, die im Rohrring 9 des Rotors 2 über ein Fenster 10 eingreift, das sich in Axialrichtung derart erstreckt, dass ein Sektor 5 stirnseitig ausgezogen werden kann.

Zweckmäßiger Weise ist die Außenfläche des Generators/Elektromotors mit Kühlrippen 11 versehen.

## Patentansprüche

1. Generator/Elektromotor, insbesondere für die Verwendung an Windkraftanlagen, Seilzuganlagen oder hydraulischen Anlagen, umfassend ein Lager, einen am Lager festliegenden Ringstator (3), einen gegenüber dem Stator (3) umlaufenden Rotor (2), und mit dem Rotor (2) verbundene Betätigungsmittel, Permanentmagnete und Wicklungen, die jeweils an gegenüberliegenden Flachen des Stators (3) und des Rotors (2) angeordnet sind; wobei der Rotor (2) und der Stator (3) durch in Axialrichtung verlaufende Schnitte in einzelne Sektoren (4, 5) unterteilt sind, die aneinander anliegend angeordnet sind; wobei jeder Sektor (4) des Sektors (3) eine Wicklung (6) umfasst, wobei die Wicklungen (6) als Einzelwicklungen in der Form von Zahnspulen ausgeführt sind; und wobei jeder Sektor (5) des Rotors (2) mindestens einen Permanentmagneten (7) umfasst;
**dadurch gekennzeichnet dass**
jeder Sektor (4, 5) verschiebbar ist um einen einzelnen Sektor (4, 5) in Axialrichtung einzubringen oder auszuziehen, und dass der mindestens eine Permanentmagnet (7) und die Wicklung (6) jeweils an einer Basis angeordnet sind, die mit einem schwalbenschwanzförmigen Profil versehen ist, das in einem Fenster des Statorenrings/Rotorenrings eingreift; und der Rotor ein Rotorring (2) ist und einem Rohrring (9) aufweist.

## Claims

1. Generator/electric motor, in particular for use with wind power plants, cable pulley systems or hydraulic plants, comprising a bearing, an annular stator (3) fixed to the bearing, a rotor (2) rotating relative to the stator (3) and with actuating means connected to the rotor (2), permanent magnets and windings disposed on oppositely lying surfaces of the stator (3) and rotor (2) respectively; and the rotor (2) and stator (3) are sub-divided by means of cuts extending in the axial direction into individual sectors (4, 5) disposed adjacent to one another; and every sector (4) of the stator (3) has a winding (6) and the windings (6) are provided as individual windings in the form of tooth-wound coils; and every sector (5) of the rotor (2) has at least one permanent magnet (7);
**characterised in that**
every sector (4, 5) can be moved in order to insert or remove an individual sector (4, 5) in the axial direction, and the at least one permanent magnet (7) and the winding (6) are disposed on a base which is provided with a dovetailed profile which locates in a window of the stator ring/rotor ring; and the rotor is a rotor ring (2) and has a tubular ring (9).

## Revendications

1. Générateur/moteur électrique, notamment pour l'utilisation sur des installations éoliennes, des installations de traction par câble, ou des installations hydrauliques, ledit générateur/moteur électrique comportant un support, un stator annulaire (3) monté fixe le support, un rotor (2) rotatif par rapport au stator (3), et des moyens de commande reliés au rotor (2), des aimants permanents et des enroulements qui sont disposés respectivement sur des surfaces opposées du stator (3) et du rotor (2) ; dans lequel le rotor (2) et le stator (3) sont subdivisés par des découpes, s'étendant dans une direction axiale, en secteurs individuels (4, 5) qui sont disposés en appui l'un sur l'autre ; dans lequel chaque secteur (4) du stator (3) comporte un enroulement (6), les enroulements (6) étant conformés en enroulements individuels se présentant sous la forme de bobines dentées ; et dans lequel chaque secteur (5) du rotor (2) comporte au moins un aimant permanent (7);
**caractérisé en ce que**
chaque secteur (4, 5) est déplaçable pour introduire ou extraire un secteur individuel (4, 5) dans une direction axiale, et **en ce que** au moins un aimant permanent (7) et l'enroulement (6) sont disposés chacun sur une base qui est dotée d'un profil en forme de queue d'aronde qui s'engage dans une fenêtre de la bague de stator/bague de rotor ; et le rotor est une bague de rotor (2) et comporte une bague tubulaire (9).
